Europäisches Patentamt

European Patent Office

Office européen des brevets

(11) Publication number: **0 331 355**
A1

# EUROPEAN PATENT APPLICATION

(21) Application number: 89301797.0

(22) Date of filing: 23.02.89

(51) Int. Cl.⁴: **F02B 37/10** , **F02B 33/36** , **F02B 37/12** , **F02B 39/04**

(30) Priority: 29.02.88 JP 44155/88
13.06.88 JP 143771/88

(43) Date of publication of application:
06.09.89 Bulletin 89/36

(84) Designated Contracting States:
DE FR GB

(71) Applicant: ISHIKAWAJIMA-HARIMA JUKOGYO
KABUSHIKI KAISHA
2-1, Ote-machi 2-chome
Chiyoda-ku Tokyo 100(JP)

(72) Inventor: Iguchi, Yuichi
No. 17-7, Shinsen-cho
Shibuya-ku Tokyo-to(JP)
Inventor: Sakakida, Masaru
No. 2-14-38, Gotokuji
Setagaya-ku Tokyo-to(JP)
Inventor: Tanaka, Shinya
No. 1-4-16, Sakura-machi
Koganei-shi Tokyo-to(JP)
Inventor: Mayashita, Kazuya
No. 4-10-17-102, Takahama
Chiba-shi Chiba-ken(JP)

(74) Representative: Jennings, Nigel Robin et al
KILBURN & STRODE 30 John Street
London WC1N 2DD(GB)

(54) Turbochargers and method of driving same.

(57) A turbocharger comprises a single positive displacement rotary compressor (I), one end of a shaft (2a) of which is connected to a mechanical driving unit (II) which, in use, transmits power from an output shaft of an engine. The other end of the shaft (2a) of the compressor is coupled to an exhaust turbine (III) which is driven by exhaust gases from the engine. In use, the compressor is driven principally by the mechanical driving unit at low engine speeds and by the exhaust turbine at high engine speeds.

Fig. 4

## TURBOCHARGERS AND METHOD OF DRIVING SAME

The present invention relates to superchargers and more particularly to turbochargers as are provided on various types of petrol and diesel engines to compress and force the combustion air into the engine and relates also to a method of driving turbochargers.

There are two ways of driving the compressor of a supercharger for supercharging an engine. One type of supercharger is the mechanically driven type in which the compressor is directly geared to an output shaft of the engine while the other type is the exhaust-turbine type in which the compressor is connected to a turbine which is rotated by exhaust gases from the engine.

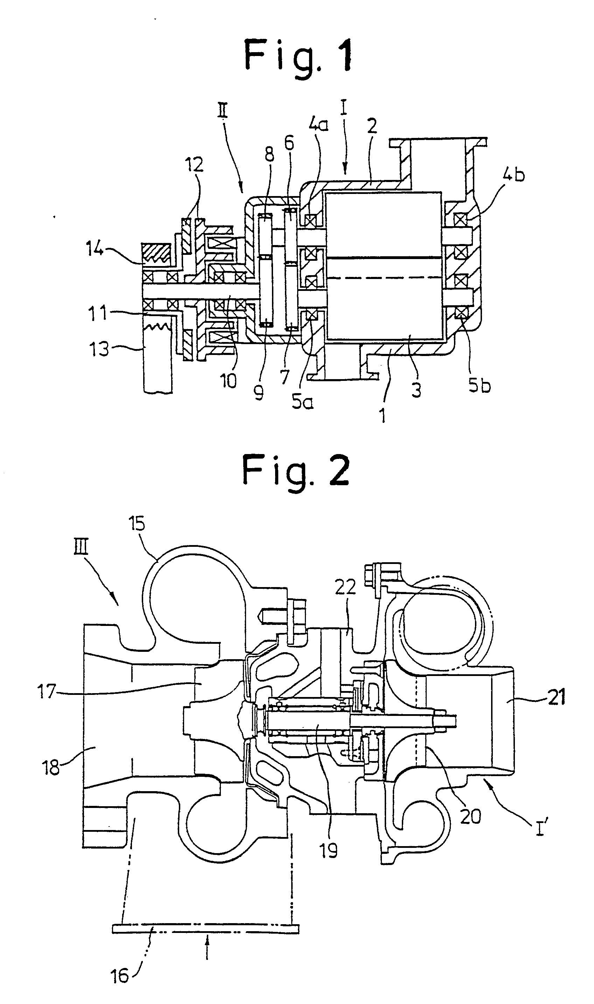

Figure 1 is a schematic longitudinal sectional view of a known supercharger of the mechanically driven type which comprises a positive displacement section I and a mechanical drive section II. The compressor section I comprises two rotors 2 and 3 disposed parallel to each other within a casing 1. The ends of the rotors 2 and 3 are supported by bearings 4a, 4b, 5a and 5b, respectively. The drive section II is mounted on one side surface of the casing 1 of the compressor section I and transmits power from the output shaft of the engine through a gear train to the two rotors 2 and 3 so that the latter are rotated. The drive section II incorporates timing gears 6 and 7 engaged with one respective end of the rotors 2 and 3, meshing acceleration gears 8 and 9 carried by the one end of the rotor 2 and a shaft 10, respectively, and a clutch 12 for detachably engaging the shaft 10 with a shaft 11 which is rotated from the exterior. An endless belt 13 extends between the output shaft (not shown) of the engine and a pulley 14 which is carried by the shaft 11 and is supported by the shaft 10. Power is thus transmitted from the output shaft of the engine through the endless belt 13, the pulley 14, the clutch 12, the acceleration gears 8 and 9 and the timing gears 6 and 7 to the rotors 2 and 3 to drive the compressor I.

Figure 2 is a side elevation, partly in section, of a supercharger of exhaust turbine type or turbocharger. This comprises a centrifugal compressor I' which is driven by a turbine III of the same construction. The turbine III includes a turbine casing 15 which contains a turbine wheel 17 and affords a gas inlet 16 and a gas outlet 18. The turbine III is connected via a bearing casing 22 to the centrifugal compressor I' in which a compressor wheel 20 is rotatably connected to the wheel 17 and is thus rotated by the energy of the exhaust gas flowing through the turbine casing 15.

The mechanically driven type of supercharger is advantageous in that the supercharging efficiency is high even when the rotational speed of the engine is low, since the compressor is driven directly from the output shaft of the engine. However, this mechanical drive is inherently associated with mechanical losses which result in a reduction of the efficiency as compared with an exhaust-turbine driven supercharger.

The exhaust-turbine driven type of supercharger has the advantage that the energy of the exhaust gases to be discharged into the surrounding air is partially reclaimed thereby producing a high thermal efficiency. However, there is the problem that it is impossible to provide an effective supercharging performance when the rotational speed of the engine is low since the available energy of the exhaust gases at low engine speeds is low also.

Accordingly, if one wishes to combine both the known methods of driving the compressor of a supercharger in order to effect efficient supercharging from low to high speeds of the engine, it has previously been necessary to use two compressors, i.e. a displacement compressor and a centrifugal compressor.

It is thus an object of the present invention to provide a turbocharger which can effect highly efficient supercharging at all rotational speeds of the engine but which has only one compressor.

According to the present invention a turbocharger comprising a single positive displacement rotary compressor, a shaft of which is connected to a mechanical driving unit which, in use, transmits power from an output shaft of an engine, is characterised in that the shaft or one of the shafts of the compressor is coupled to an exhaust turbine which, in use, is driven by exhaust gases from the engine.

Thus the turbocharger in accordance with the invention has only a single compressor which is of positive displacement type and which is connected to be driven not only by a mechanical driving unit connected to an output shaft of the engine but also by an exhaust turbine which is driven by exhaust gases from the engine. It is preferred that the compressor is a screw compressor and that the exhaust turbine is a variable displacement type. The exhaust turbine is preferably coupled to the compressor by means of gears which are so constructed that the compressor rotates slower than the exhaust turbine, that is to say the rotation of the exhaust turbine is geared down before being connected to the compressor.

The present invention relates also to a method of driving a turbocharger of an engine, the turbocharger including a single positive displacement compressor, in which at low engine speeds the compressor is driven principally by power derived from an output shaft of the engine, which method is characterised in that at high engine speeds the compressor is driven principally by an exhaust gas turbine to which the compressor is connected and which is rotated by the exhaust gases emitted from the engine.

Further features and details of the invention will be apparent from the following description of two specific embodiments which is given by way of example with reference to Figures 3 to 5 of the accompanying drawings, in which:

Figure 3 is a schematic diagram illustrating the underlying principle of a turbocharger in accordance with the present invention;

Figure 4 is a sectional view of a first embodiment of a turbocharger in accordance with the present invention; and

Figure 5 is a sectional view of a second embodiment of the present invention.

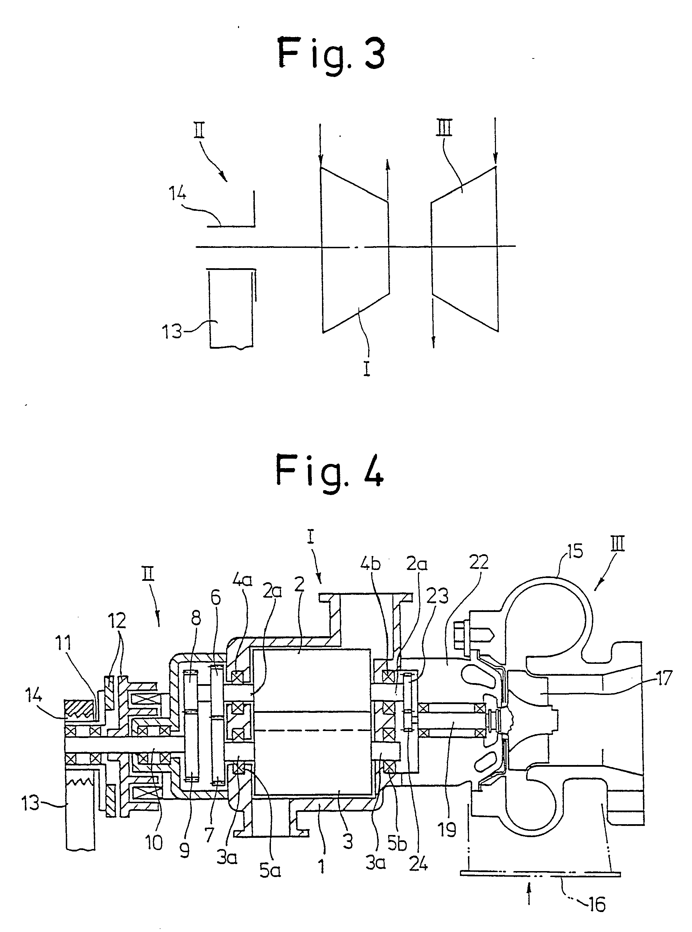

Figure 3 illustrates the fundamental construction of a turbocharger in accordance with the present invention. It includes a positive displacement compressor I operatively coupled to a mechanical driving unit II for transmitting power from the output shaft of the engine to the displacement compressor I and coupled to an exhaust turbine III so that the displacement compressor I is driven not only by power transmitted from the output shaft of the engine but also by the energy of the exhaust gases.

Turning now to the specific construction of Figure 4, the turbocharger includes a positive displacement compressor I with two rotors 2 and 3 which have respective shafts 2a and 3a supported by bearings 4a and 4b, 5a and 5b, respectively. One end of each shaft 2a and 3a is drivingly connected to a mechanical driving unit II having the construction described above with reference to Figure 1 so that power is transmitted from the output shaft of the engine through the endless belt 13, the pulley 14, the clutch 12 which now connects the shafts 11 and 10, the shaft 10, the acceleration gears 9 and 8 and the timing gears 6 and 7 to the rotors 2 and 3 to drive the compressor I. The other end of the shaft 2a of the rotor 2 carries a gear 23 to which is transmitted the rotary force produced by the exhaust turbine III. The exhaust turbine III includes a turbine casing 15 into which exhaust gases are introduced through an inlet 16 and which contains a turbine wheel 17. The turbine III is attached to the compressor casing 1 through a bearing casing 22. Furthermore, a gear 24 of relatively small diameter is carried by one end of a shaft 19 which is connected to the turbine wheel 17 and which is rotatably supported in the bearing casing 22 and is in mesh with the gear 23, which is of relatively large diameter. The driving force produced by the exhaust turbine III is thus transmitted by the gears 24 and 23, which effect a gearing down, to the rotor 2 which in turn transmits the driving force to the rotor 3 through the timing gears 6 and 7 to drive the displacement compressor I.

When the rotational speed of the engine is in the low range, the quantity of exhaust gases discharged from the engine is relatively small and the power transmitted from the output shaft of the engine through the belt 13, the pulley 14, which now connects the shafts 11 and 10, and the acceleration gears 6 and 7 is thus principally responsible for driving the compressor I to compress and charge the combustion air in the engine. When the rotational speed of the engine is increased into the high speed range, the rotors 2 and 3 are rotated by the exhaust turbine III which is driven by the exhaust gases emitted from the engine to drive the compressor I. Therefore by using only one positive displacement compressor I in the turbocharger, supercharging can be carried out with a high degree of efficiency over the whole range of the rotational speed of the engine, i.e. even when the rotational speed of the engine is low or high.

In the turbocharger described above, the clutch 12 normally connects the shafts 11 and 10 so that when the output of the exhaust turbine III rises above the power required for driving the compressor I, part of the output power is returned to the engine through the gears, the endless belt 13 etc., whereby the efficiency of the engine is further increased.

In the construction according to the present invention, the exchange of the energy between the compressor and the engine through the mechanical driving unit II can be carried out over the whole range of rotational speeds of the engine so that the single compressor can be automatically and effectively driven over a wide range of speeds, i.e. low speed to high speed, of the engine.

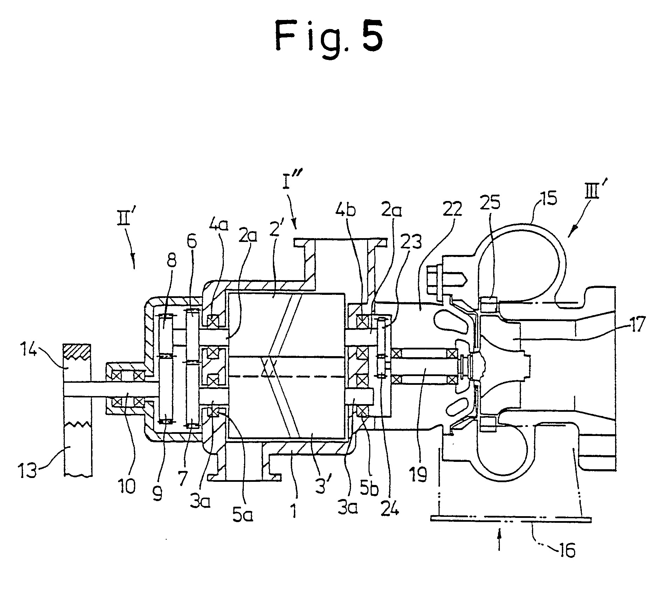

Figure 5 illustrates a second embodiment of the present invention in which instead of the positive displacement compressor I having rotors 2 and 3, a screw compressor I″ having screw rotors 2′ and 3′ is used. A mechanical driving unit II′ without a clutch is connected to one side of the screw compressor I″ and, instead of the exhaust turbine III described above with reference to Figure 2, a variable displacement exhaust turbine III′ of the type in which the flow rate and pressure of the exhaust gases supplied to the turbine wheel 17 can be varied by the adjustment of the angle of inclination of a vaned nozzle 25 is attached to the other side of the screw compressor I″. Variable displacement turbines are known per se and are disclosed in e.g. EP-A-0227475.

In the second embodiment the operating range of the variable displacement exhaust turbine III′ is greater than that of the exhaust turbine III so that the energy of the exhaust gases can be more effectively recovered and a highly efficient supercharging operation can be carried out in a wide range of engine speeds.

It will be understood that the present invention is not limited to the embodiments described above and that various modifications may be effected. For instance. any suitable turbine such as a displacement turbine, an axial turbine or the like may be used as the exhaust turbine.

## Claims

1. A turbocharger comprising a single positive displacement rotary compressor, a shaft of which is connected to a mechanical driving unit which, in use, transmits power from an output shaft of an engine, characterised in that the shaft or one of the shafts (3,4) of the compressor (I) is coupled to an exhaust turbine (III) which, in use, is driven by exhaust gases from the engine.

2. A turbocharger as claimed in claim 1 , characterised in that the compressor is a screw compressor (I'').

3. A turbocharger as claimed in claim 1 or claim 2, characterised in that the exhaust turbine is a variable displacement exhaust turbine (III').

4. A turbocharger as claimed in any one of the preceding claims, characterised in that the exhaust turbine (III) is coupled to the compressor (I) by means of gears (23,24) which are so constructed that the compressor rotates slower than the exhaust turbine.

5. A method of driving a turbocharger of an engine, the turbocharger including a single positive displacement compressor, in which at low engine speeds the compressor is driven principally by power derived from an output shaft of the engine, characterised in that at high engine speeds the compressor is driven principally by an exhaust gas turbine (III) to which the compressor is connected and which is rotated by the exhaust gases emitted from the engine.

# Fig. 1

# Fig. 2

EP 0 331 355 A1

# Fig. 3

# Fig. 4

EP 0 331 355 A1

# Fig. 5

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | GB-A-2 080 432 (SOUTH WESTERN INDUSTRIAL) <br> * Abstract; page 2, lines 26-65,85-89; page 3, lines 10-14; figure 1 * | 1-5 | F 02 B 37/10 <br> F 02 B 33/36 <br> F 02 B 37/12 <br> F 02 B 39/04 |
| X | WO-A-8 000 169 (SAAB-SCANIA) <br> * Abstract; page 3, lines 11-23; figure 1 * | 1-5 | |
| A | EP-A-0 222 082 (MAN GUTEHOFFNUNGSHÜTTE) | | |
| A | DE-A-3 124 668 (DAIMLER-BENZ) | | |
| A | FR-A- 571 224 (ROVIN) | | |

TECHNICAL FIELDS SEARCHED (Int. Cl.4)

F 02 B
F 02 C

The present search report has been drawn up for all claims

| Place of search | Date of completion of the search | Examiner |
|---|---|---|
| THE HAGUE | 16-05-1989 | ERNST J.L. |

EPO FORM 1503 03.82 (P0401)